# EUROPEAN PATENT APPLICATION

(11) **EP 3 062 253 A1**
(43) Date of publication of application: **31.08.2016**
(21) Application number: 15275041.0
(22) Date of filing: 25.02.2015
(51) Int. Cl.: G06F 21/00, G06T 19/00

(54) **Method and apparatus for data verification in a mixed reality system**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A method and apparatus for verifying the integrity of image data in a mixed reality display system comprising a screen (102) and a processor (106) for receiving image data captured from a user's real world environment and configured to blend the image data into a three dimensional virtual environment to create a mixed reality environment for display on the screen (102). A beacon (108) is provided within the user's real world environment, such that image data representative thereof is captured by the image capture device(s) (104) of the mixed reality display system, wherein the beacon (108) is configured to emit a known predetermined signal. The signal is then identified from the captured image data of the beacon (108), and the identified signal is compared with the known predetermined signal, such that the integrity of the image data can be verified if the identified signal matches the known predetermined signal.

## Description

This invention relates generally to a method and apparatus for data verification in a mixed reality system and, more particularly, to a method and apparatus for verifying the integrity, or otherwise, of data displayed within a mixed reality system.

Virtual reality systems are known, comprising a headset which, when placed over a user's eyes, creates and displays a three dimensional virtual environment in which a user feels immersed and with which the user can interact in a manner dependent on the application. For example, the virtual environment may comprise a game zone, within which the user can play a game.

More recently, augmented and mixed reality systems have been developed, wherein image data captured in respect of a user's real world environment can be captured, rendered and placed within a 3D virtual reality environment. Thus, the user views their real world environment as a three dimensional virtual world generated images captured from their surroundings. However, since the user is not viewing their real world environment through their own eyes, they have no way of ensuring that the images they are being presented with are accurate, timely and have not been tampered with as a result of, for example, a cyber attack.

It would be desirable to provide a means by which a user of a mixed reality system can verify, on a dynamic and ongoing basis, that the visual information they are presented with on their mixed reality screen is, in fact, a true and accurate representation of their real world environment in real time, i.e. that the mixed reality system is functioning correctly and has not been tampered with or otherwise compromised, and it is an object of aspects of the present invention to address these issues.

In accordance with an aspect of the present invention, there is provided a method of verifying the integrity of image data in a mixed reality display system comprising a screen and a processor for receiving image data captured from a user's real world environment and configured to blend said image data into a three dimensional virtual environment to create a mixed reality environment for display on said screen, the method comprising providing a beacon within the user's real world environment, such that image data representative thereof is captured by said mixed reality display system, wherein said beacon is configured to emit a known predetermined signal, identifying said signal from said captured image data of said beacon, comparing said identified signal with a said known predetermined signal, and verifying the integrity of said image data if said identified signal matches said known predetermined signal.

In an exemplary embodiment of the invention, the predetermined signal may be a time-dependent signal. The predetermined signal may a visible signal. For example, the beacon may comprise a lamp configured to emit periodic pulses of light in a predetermined pattern. In this case, the mark/space ratio of said pattern of light pulses may be representative of a time-dependent code. In another exemplary embodiment, the lamp may be configured to emit pulses of light of different colours, and wherein the sequential pattern of colour and/or duration of said pulses is representative of a time-dependent code. The predetermined signal may, additionally or alternatively, be an auditory signal. For example, the beacon may be configured to emit tones, music or any other type of sound pattern recognisable to a user or, in the case of an automated system, to the system.

In accordance with an exemplary embodiment of this aspect of the invention, the method may further comprise the step of configuring the beacon to encode said predetermined signal to generate a visual pattern representative thereof. In this case, the beacon may be configured to generate said predetermined signal and provide data representative of said predetermined signal to a user of said mixed reality display system. For example, the predetermined signal may comprise an alphanumeric sequence generated by said beacon. The method may further include the step of configuring the beacon to randomly generate said alphanumeric sequence. Alternatively, the predetermined signal may comprise an alphanumeric sequence entered into the beacon by a user.

In accordance with an exemplary embodiment of the invention, the method may further comprise the step of extracting said visual pattern from image data captured by said mixed reality display system, and decoding said extracted visual pattern to obtain the signal of which it is representative. The method may further comprise outputting said signal, and verifying the integrity of said image data if said provided signal matches said known predetermined signal. In this case, the step of outputting said signal may comprise displaying a visual representation of said signal to said user of said mixed reality display system, wherein the method may further comprise comparing, by said user, said displayed signal with said known predetermined signal and verifying the integrity of said image data if they match.

In accordance with another aspect of the present invention, there is provided apparatus for verifying the integrity of image data in a mixed reality display system comprising a screen and a processor for receiving image data captured from a user's real world environment and configured to blend said image data into a three dimensional virtual environment to create a mixed reality environment for display on said screen, the apparatus comprising a beacon for location within the user's real world environment, such that image data representative thereof is captured by said mixed reality display system, wherein said beacon is configured to emit a known predetermined signal, the apparatus further comprising a processing module for identifying said signal from said captured image data of said beacon, and outputting said identified signal such that it can be compared with said known predetermined signal and the integrity of said image data verified if said identified signal matches said known predetermined signal.

The beacon may be configured to encode said predetermined signal to generate a visual pattern representative thereof.

The beacon may be configured to generate said predetermined signal and provide data representative of said predetermined signal to a user of said mixed reality display system.

In an exemplary embodiment of the invention, the predetermined signal may comprise an alphanumeric sequence generated by said beacon. In this case, the beacon may be configured to randomly generate said alphanumeric sequence.

The apparatus may further comprise a module for extracting said visual pattern from image data captured by said mixed reality display system, and decoding said extracted visual pattern to obtain the signal of which it is representative.

The beacon may, alternatively or additionally, be configured to output an auditory signal. Indeed, a complete system may require the use of both audio and visual cues, depending on the configuration of the system, and the present invention is not necessarily intended to be limited in this regard.

In an exemplary embodiment of the invention, the processing module may be configured to output said signal so as to cause it to be displayed in the form of a visual representation of said signal to said user of said mixed reality display system, so as to enable the user to compare said displayed signal with said known predetermined signal and thereby verify the integrity of said image data if they match.

In accordance with yet another aspect of the present invention, there is provided a mixed reality display system comprising a screen and a processor for receiving image data captured from a user's real world environment and configured to blend said image data into a three dimensional virtual environment to create a mixed reality environment for display on said screen, the apparatus further comprising a processing module for identifying and extracting an encoded signal from captured image data of a beacon located within a user's real world environment, decoding said extracted signal and displaying said decoded signal on said screen such that it can be compared with a known predetermined signal and the integrity of said image data verified if said decoded signal matches said known predetermined signal.

These and other aspects of the present invention will be apparent from the following specific description in which embodiments of the present invention are described, by way of examples only and with reference to the accompany drawings, in which:
Figure 1 is a front perspective view of a headset for use in a mixed reality system in respect of which a method and apparatus according to an exemplary embodiment of the present invention can be provided;
Figure 2 is a schematic block diagram of a mixed reality system including apparatus according to a first exemplary embodiment of the present invention;
Figure 3 is a schematic view of a mixed reality environment illustrating a method according to a first exemplary embodiment of the present invention;
Figure 4 is a schematic block diagram of a mixed reality system including apparatus according to a second exemplary embodiment of the present invention;
Figure 5 is a schematic view of a mixed reality environment illustrating a method according to a second exemplary embodiment of the present invention; and
Figure 6 is a schematic flow diagram illustrating a method of image data verification according to an exemplary embodiment of the present invention.

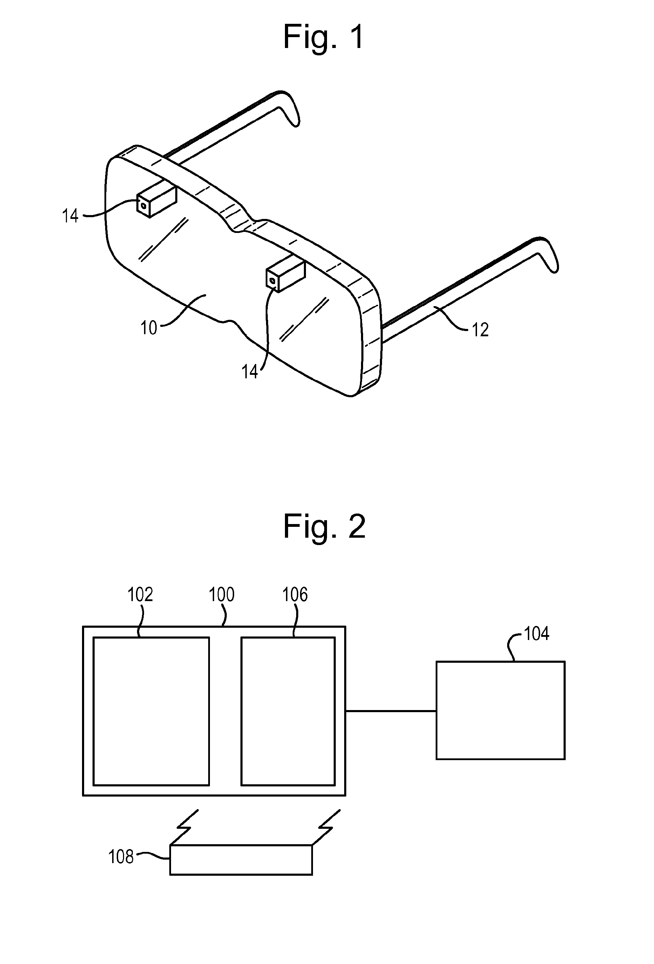

Referring to Figure 1 of the drawings, a mixed reality display system may include a headset comprising a visor 10 having a pair of arms 12 hingedly attached at opposing sides thereof in order to allow the visor to be secured onto a user's head, over their eyes, in use, by placing the curved ends of the arms 12 over and behind the user's ears, in a manner similar to conventional spectacles. It will be appreciated that, whilst the headset is illustrated herein in the form of a visor, it may alternatively comprise a helmet for placing over a user's head, or even a pair of contact lenses or the like, and the present invention is not intended to be in any way limited in this regard. Also provided on the headset, is a pair of image capture devices 14 for capturing images of the environment, such image capture devices being mounted as closely as possible aligned with the user's eyes, in use.

A typical mixed reality system further comprises a processor, which is communicably connected in some way to a screen which is provided inside the visor 10. Such communicable connection may be a hard wired electrical connection, in which case the processor and associated circuitry will be mounted on the headset. Alternatively, however, the processor may be configured to wirelessly communicate with the visor, for example, by means of Bluetooth or similar wireless communication protocol, in which case, the processor need not be mounted on the headset but can instead be located remotely from the headset, with the relative allowable distance between them being dictated, and limited only by, the wireless communication protocol being employed. For example, the processor could be mounted on, or formed integrally with, the user's clothing, or instead located remotely from the user, either as a stand-alone unit or as an integral part of a larger control unit, for example.

Referring to Figure 2 of the drawings, a mixed reality system including apparatus according to an exemplary embodiment of the present invention comprises, generally, a headset 100 incorporating a screen 102, a processor 104, a pair of external digital image capture devices (only one shown) 106. The processor 104 receives image data from the image capture devices 106, for and renders and blends such image data, in real time, into a displayed three dimensional virtual environment. Furthermore, the processor receives data from one or more external sources, generates and updates a virtual representation thereof in real time, and displays that virtual representation of the data within the above-mentioned virtual environment.

The concept of real time image blending for augmented or mixed reality is known, and several different techniques have been proposed. The present invention is not necessarily intended to be limited in this regard. However, for completeness, one exemplary method for image blending will be briefly described. Thus, in respect of an object or portion of a real world image to be blended into the virtual environment, a threshold function may be applied in order to extract that object from the background image. Its relative location and orientation may also be extracted and preserved by means of marker data. Next, the image and marker data is converted to a binary image, possibly by means of adaptive thresholding (although other methods are known). The marker data and binary image are then transformed into a set of coordinates that match the location within the virtual environment in which they will be blended. Such blending is usually performed using black and white image data. Thus, if necessary, colour data sampled from the source image can be backward warped, using homography, to each pixel in the resultant virtual scene. All of these computational steps require minimal processing and time and can, therefore, be performed quickly and in real (or near real) time. Thus, as the user's field of view and/or external surroundings change, image data within the mixed reality environment can be updated in real time.

The system further comprises a remote beacon 108, for placement within the user's real world environment such that, in use, the image capture devices 106 capture image data representative thereof. In general, a beacon is defined as an intentionally conspicuous device designed to attract attention to a specific location. In the context of the present invention, a beacon is intended to refer to a physical device that is configured to emit a known, predetermined time-varying signal that can be captured, detected or identified by a mixed reality display system.

In accordance with a first exemplary embodiment of the present invention, the beacon 108 comprises a physical device, placed within the filed of view of the image capture devices of a mixed reality display system, which is configured to emit a visible time-varying signal, the pattern or other unique nature of which is known to the user of the mixed reality display system. Thus, the beacon 108 could be configured to emit bursts of visible light in a predetermined, time-varying pattern of bursts, or a predetermined, time-sensitive sequence of colours. In alternative exemplary embodiment of the invention, the beacon 108 may be configured to display a unique time-sensitive alpha-numeric code or pattern of alpha-numeric characters.

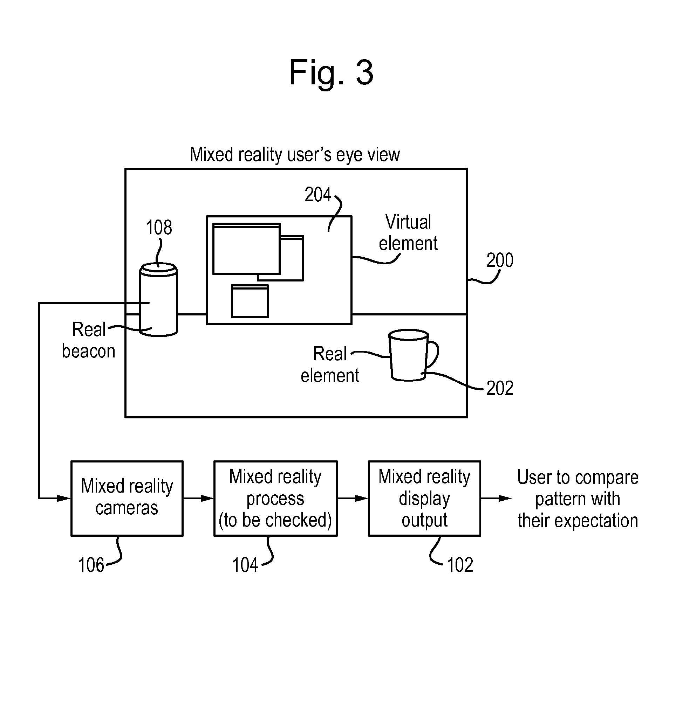

Referring to Figure 3 of the drawings, there is illustrated a mixed reality display 200 (within a user's headset, not shown) on which is displayed a mixed reality image comprised of a real world object 202 and a virtual element 204. An image of the real world environment, including the object 202, has been captured by the image capture devices 106 on the user's headset, and the image has been rendered and blended by the processor 104 into a three dimensional virtual environment for display on the screen 102. Data from an external source is fed into the system, represented in a virtual form 204, and also blended into and displayed within the three dimensional virtual environment.

Included within the real world environment, there is a beacon 108 comprising a device configured to emit a unique time-sensitive signal. For the purposes of the following description, the beacon is assumed to a be a light emitting device configured to emit a time-sensitive pattern of visible light pulses but, as explained above, the present invention is not necessarily intended to be limited in this regard. Clearly, the beacon 108, and its output, will be captured within the images captured by the mixed reality display system, such that the rendered and blended image displayed on the screen 200 includes the beacon and the visible signal output thereby.

In accordance with a first exemplary embodiment of the present invention, the unique time-sensitive signal pattern emitted by the beacon 108 is know to the user. Thus, the user can simply monitor the beacon output displayed within the three-dimensional image display 200 and confirm that the correct signal is being emitted, in accordance with real time. If it is determined that the signal is out of sequence or synchronisation with the correct time, the user can identify this and take corrective action, knowing that there has been a potential breach of data security or other event affecting data integrity.

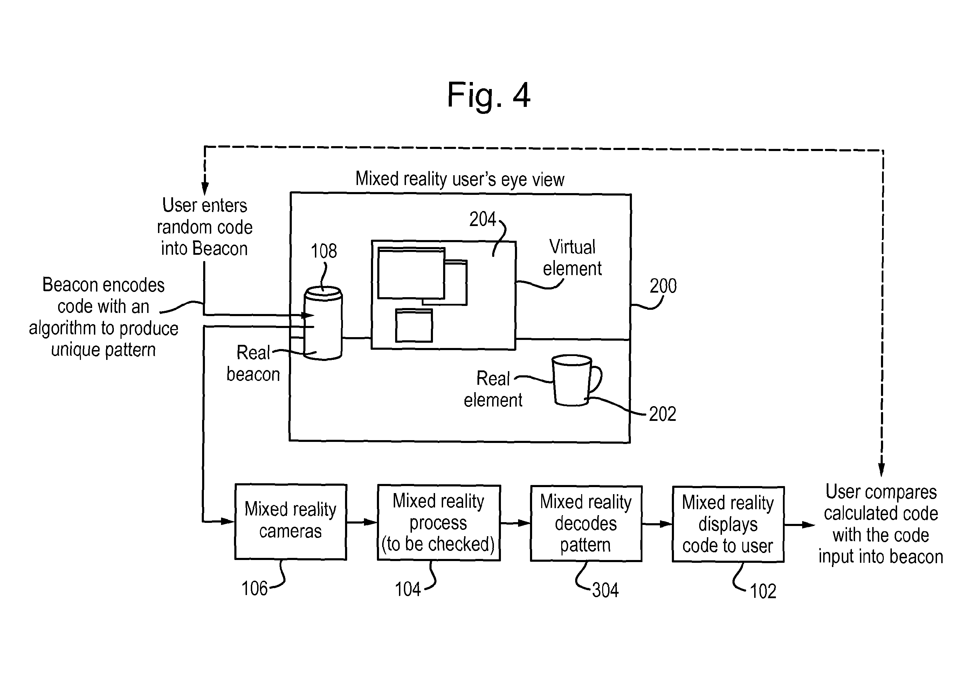

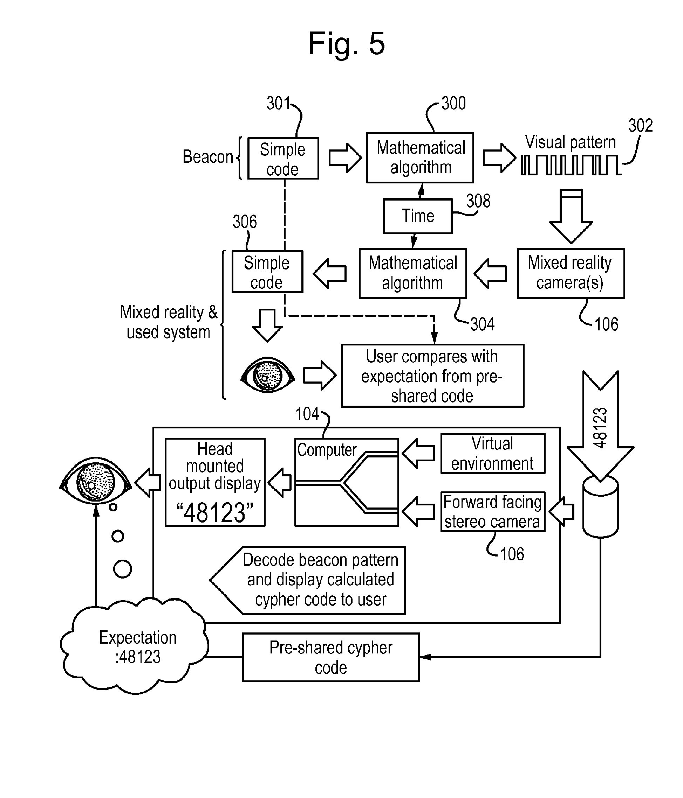

Whilst the above-described process is effective in many circumstances, it does place an additional burden on the user of the system, to ensure and verify the integrity of the data. Thus, referring to Figures 4 and 5 of the drawings, another exemplary embodiment of the present invention is illustrated schematically. Referring first to Figure 4 of the drawings, there is illustrated a mixed reality display 200 (within a user's headset, not shown) on which is displayed a mixed reality image comprised of a real world object 202 and a virtual element 204. An image of the real world environment, including the object 202, has been captured by the image capture devices 106 on the user's headset, and the image has been rendered and blended by the processor 104 into a three dimensional virtual environment for display on the screen 102. Data from an external source is fed into the system, represented in a virtual form 204, and also blended into and displayed within the three dimensional virtual environment.

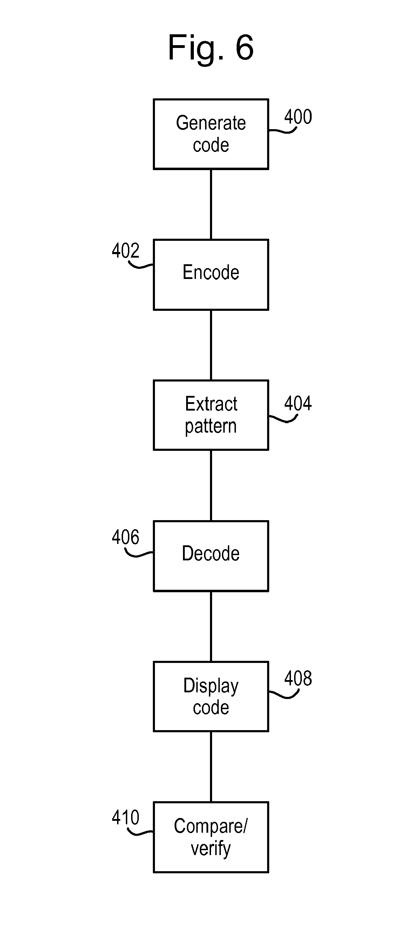

Once again there is a beacon 108 included within the real world environment, the beacon 108 comprising a device configured to generate and/or store a unique time-sensitive signal. In this case, and for the purposes of this description, the device is in this case assumed to be a random cypher code generator configured to generate a random, multi-digit numeric code. However, in an alternative exemplary embodiment, the user may simply enter a numeric code of their choice into the beacon. In the latter case, and referring additionally to Figure 5 and 6, of the drawings, at the start of a predetermined time period or shift, for example, the user enters into the beacon 108 a cypher code 301 which is provided or otherwise known to the user at the start of the predetermined time period, before use of the mixed reality display system. The beacon remains within the real world environment such that it is included within the images captured by the image capture devices 106 of the mixed reality display system. The beacon 108, in this case, includes an encoding module 300 which encodes the current cypher code at which the beacon is set, using a suitable mathematical algorithm, to generate a complex visual pattern 302 representative thereof, and this complex visual pattern is displayed by the beacon 108 such that it is included in the images captured by the mixed reality display system.

The mixed reality display system includes a decoding module 304, which is configured to use image recognition techniques to extract the visual pattern 302 from each of the captured images, and decode it using the reverse of the above-mentioned mathematical algorithm to generate the cypher code 306 of which it is representative and this cypher code 306 is displayed on the user's screen for visual verification by the user that it is the same as the one they were provided with at the start of the predetermined time period. A synchronisation module 308 is provided between the encoding module 300 of the beacon 108 and the decoding module 304 of the mixed reality display system, so as to ensure that their internal clocks are accurately synchronised.

Thus, referring to Figure 6 of the drawings, a method according to an exemplary embodiment of the present invention comprises, at step 400, using a beacon to randomly generate a cypher code and providing the cypher code to a user. The cypher code is encoded, at step 402, using any suitable mathematical algorithm, to generate a visual pattern representative of the code, the visual pattern being displayed by the beacon and, therefore, included within the images captured by the mixed reality system. At step 404, image recognition techniques are used to identify and extract the visual pattern from each captured image and, at step 406, the extracted visual pattern is decoded to generate the cypher code of which it is representative. At step 408, the cypher code thus generated is displayed on the user's display screen and, at step 410, is compared by the user with the cypher code they were originally provided with in order to verify that they match.

It will be apparent to a person skilled in the art, from the foregoing description, that modifications and variations can be made to the described embodiments without departing from the scope of the invention as claimed. For example, in an alternative exemplary embodiment, the mixed reality system may include a module for automatically comparing the decoded cypher code obtained from the captured images with the cypher code originally generated by the beacon, and periodically output a signal indicative that a match has been detected and/or an alert in the event that the two codes are determined not to match.

## Claims

1. A method of verifying the integrity of image data in a mixed reality display system comprising a screen and a processor for receiving image data captured from a user's real world environment and configured to blend said image data into a three dimensional virtual environment to create a mixed reality environment for display on said screen, the method comprising providing a beacon within the user's real world environment, such that image data representative thereof is captured by said mixed reality display system, wherein said beacon is configured to emit a known predetermined signal, identifying said signal from said captured image data of said beacon, comparing said identified signal with said known predetermined signal, and verifying the integrity of said image data if said identified signal matches said known predetermined signal.

2. A method according to claim 1, wherein said predetermined signal is a time-dependent signal.

3. A method according to claim 1 or claim 2, wherein said predetermined signal is a visible signal.

4. A method according to any of the preceding claims, wherein said predetermined signal is an auditory signal.

5. A method according to any of the preceding claims, wherein said beacon comprises a lamp configured to emit periodic pulses of light in a predetermined pattern.

6. A method according to claim 5, wherein the mark/space ratio of said pattern of light pulses is representative of a time-dependent code.

7. A method according to claim 5, wherein said lamp is configured to emit pulses of light of different colours, and wherein the sequential pattern of colour and/or duration of said pulses is representative of a time-dependent code.

8. A method according to claim 1, further comprising the step of configuring the beacon to encode said predetermined signal to generate a visual pattern representative thereof.

9. A method according to claim 8, wherein said beacon is configured to generate said predetermined signal and provide data representative of said predetermined signal to a user of said mixed reality display system.

10. A method according to claim 8 or claim 9, wherein said predetermined signal comprises an alphanumeric sequence entered into the beacon by a user.

11. A method according to claim 8 or claim 9, wherein said predetermined signal comprises an alphanumeric sequence generated by said beacon.

12. A method according to claim 10, including the step of configuring the beacon to randomly generate said alphanumeric sequence.

13. A method according to any of claims 8 to 12, further comprising the step of extracting said visual pattern from image data captured by said mixed reality display system, and decoding said extracted visual pattern to obtain the signal of which it is representative.

14. A method according to claim 13, further comprising outputting said signal, and verifying the integrity of said image data if said provided signal matches said known predetermined signal.

15. A method according to claim 14, wherein said step of outputting said signal comprises displaying a visual representation of said signal to said user of said mixed reality display system, wherein the method further comprises comparing, by said user, said displayed signal with said known predetermined signal and verifying the integrity of said image data if they match.

16. Apparatus for verifying the integrity of image data in a mixed reality display system comprising a screen and a processor for receiving image data captured from a user's real world environment and configured to blend said image data into a three dimensional virtual environment to create a mixed reality environment for display on said screen, the apparatus comprising a beacon for location within the user's real world environment, such that image data representative thereof is captured by said mixed reality display system, wherein said beacon is configured to emit a known predetermined signal, the apparatus further comprising a processing module for identifying said signal from said captured image data of said beacon, and outputting said identified signal such that it can be compared with said known predetermined signal and the integrity of said image data verified if said identified signal matches said known predetermined signal.

17. Apparatus according to claim 16, wherein said predetermined signal is an auditory signal.

18. Apparatus according to claim 16, wherein the beacon is configured to encode said predetermined signal to generate a visual pattern representative thereof.

19. Apparatus according to claim 18, wherein said beacon is configured to generate said predetermined signal and provide data representative of said predetermined signal to a user of said mixed reality display system.

20. Apparatus according to claim 18 or claim 19, wherein said predetermined signal comprises an alphanumeric sequence generated by said beacon.

21. Apparatus according to claim 20, wherein the beacon is configured to randomly generate said alphanumeric sequence.

22. Apparatus according to any of claims 18 to 21, further comprising a module for extracting said visual pattern from image data captured by said mixed reality display system, and decoding said extracted visual pattern to obtain the signal of which it is representative.

23. Apparatus according to any of claims 16 to 22, wherein said processing module is configured to output said signal so as to cause it to be displayed in the form of a visual representation of said signal to said user of said mixed reality display system, so as to enable the user to compare said displayed signal with said known predetermined signal and thereby verify the integrity of said image data if they match.

24. A mixed reality display system comprising a screen and a processor for receiving image data captured from a user's real world environment and configured to blend said image data into a three dimensional virtual environment to create a mixed reality environment for display on said screen, the apparatus further comprising a processing module for identifying and extracting an encoded signal from said captured image data of a beacon located within a user's real world environment, decoding said extracted signal and displaying said decoded signal on said screen such that it can be compared with a known predetermined signal and the integrity of said image data verified if said decoded signal matches said known predetermined signal.
